(19) **Europäisches Patentamt European Patent Office Office européen des brevets**

(11) **EP 2 591 129 B1**

(12) **FASCICULE DE BREVET EUROPEEN**

(45) Date de publication et mention de la délivrance du brevet:
**17.07.2019 Bulletin 2019/29**

(21) Numéro de dépôt: **11716304.8**

(22) Date de dépôt: **03.03.2011**

(51) Int Cl.:
*C21D 11/00* (2006.01)    *F27B 9/40* (2006.01)
*F27D 19/00* (2006.01)    *F27B 9/36* (2006.01)

(86) Numéro de dépôt international:
**PCT/IB2011/050899**

(87) Numéro de publication internationale:
**WO 2012/004686 (12.01.2012 Gazette 2012/02)**

(54) **PROCÉDÉ D'ORDONNANCEMENT DE FONCTIONNEMENT DE DISPOSITIFS DE DISTRIBUTION D'ÉNERGIE, ET INSTALLATION METTANT EN OEUVRE CE PROCÉDÉ**

**VERFAHREN ZUR PLANUNG DES BETRIEBS VON ENERGIEVERTEILUNGSVORRICHTUNGEN UND ANLAGE ZUR UMSETZUNG DES VERFAHRENS**

**METHOD FOR SCHEDULING THE OPERATION OF ENERGY DISTRIBUTION DEVICES, AND INSTALLATION IMPLEMENTING SAME**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.07.2010 FR 1055596**

(43) Date de publication de la demande:
**15.05.2013 Bulletin 2013/20**

(73) Titulaire: **Fives Stein**
**94700 Maisons Alfort (FR)**

(72) Inventeurs:
• **CHERIF IDRISSI EL GANOUNI, Oussama**
  **F-75009 Paris (FR)**
• **VALLET, Guy**
  **F-94700 Maisons Alfort (FR)**

(74) Mandataire: **IP Trust**
**2, rue de Clichy**
**75009 Paris (FR)**

(56) Documents cités:
**DE-C1- 19 512 633    FR-A1- 2 853 959**
**FR-A5- 2 167 027**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention est relative à l'optimisation de l'alimentation en énergie d'une installation équipée de dispositifs de distribution d'énergie fonctionnant en tout ou rien et en modulation de durée de fonctionnement. Les dispositifs de distribution d'énergie peuvent être notamment des brûleurs ou des résistances électriques.

L'invention concerne plus particulièrement les fours industriels équipés de brûleurs comme dispositifs de distribution d'énergie. Le brevet FR 2853959 décrit un exemple de four particulièrement visé par l'invention.

Pour un mode de fonctionnement marche/arrêt, chaque brûleur est alimenté en comburant et en combustible au travers de vannes automatiques de sectionnement individuelles. Chaque vanne est équipée de détecteurs de position, par exemple d'un capteur de fin de course ouverture et d'un capteur de fin de course fermeture.

Deux ou plusieurs dispositifs de distribution d'énergie peuvent fonctionner d'une manière synchrone de sorte qu'ils soient toujours allumés et éteints en même temps. Dans ce cas, les dispositifs synchrones sont considérés comme les parties d'un même dispositif de distribution d'énergie.

Par la suite, nous considérerons que le comburant est de l'air et le combustible du gaz, sachant que tous types de comburant et de combustible sont possibles selon l'invention.

Le pilotage du four est réalisé au moyen d'un système de contrôle-commande qui, à partir des besoins nécessaires au chauffage des produits, détermine la demande en énergie thermique que doit délivrer chaque brûleur, notamment en fonction de sa position dans le four.

Les demandes en énergie thermique sont rafraîchies périodiquement sur la base d'un intervalle de temps $I$, de durée $D$ multiple entier d'une unité de mesure de temps $\tau$, typiquement la seconde. La durée $D$ de l'intervalle de temps est notamment fonction de la taille des brûleurs, des vannes de sectionnement et du four. Par exemple définie à 60 secondes, elle est ensuite ajustée durant la mise en service, par exemple entre 30 et 120 secondes.

Les brûleurs fonctionnant en mode tout ou rien, la demande en énergie thermique se traduit par une durée d'allumage. Ainsi, durant l'intervalle de temps $I$, le temps d'ouverture $\Delta i$ et de fermeture des vannes d'air et de gaz de chaque brûleur est proportionnel à la demande en énergie thermique pour le brûleur considéré. Le temps d'ouverture $\Delta i$ est inférieur, ou au plus égal à la durée $D$ de l'intervalle de temps $I$.

L'ouverture et la fermeture des vannes d'air et/ou de gaz perturbent l'équilibre des pressions dans les canalisations, dans le four et dans le conduit d'évacuation des produits de combustion. Les perturbations ainsi créées sont d'autant plus importantes que le nombre de vannes ouvertes varie souvent et fortement durant l'intervalle de temps. Les différentes boucles de contrôle de l'installation ne sont pas à même de stabiliser les pressions si l'ordonnancement de l'allumage des brûleurs n'est pas choisi de manière optimale. Le terme « ordonnancement » désigne la répartition temporelle des durées de fonctionnement des brûleurs sur l'intervalle de temps $I$.

Par ailleurs, pour des brûleurs de fortes puissances, les vannes d'alimentation en air et gaz sont de grandes dimensions. Il en résulte que les ouvertures et fermetures complètes des vannes ne sont pas immédiates et nécessitent un certain délai dont il faut tenir compte avant de solliciter à nouveau les vannes. Durant ces régimes transitoires, la combustion n'est pas optimale en termes de rendement énergétique et de pollution. Ainsi, lorsque la demande énergétique est trop basse, la durée d'allumage de ces brûleurs n'est pas suffisante pour que la combustion soit correcte.

De même, les fréquents changements d'états, correspondant à l'allumage ou à l'arrêt d'un brûleur, sont à la source de la fatigue mécanique des vannes et des brûleurs. La réduction de la fréquence de ces changements d'états permet d'augmenter leur durée de vie.

Par ailleurs, lorsque les demandes énergétiques sont trop importantes, il y a un risque de dépassement de la capacité du four qui peut se traduire par une situation de pénurie en air et/ou en gaz. La capacité du four dépend du dessin initial, mais aussi de l'état de marche des divers équipements. Pour des raisons de sécurité, le dépassement de capacité déclenche généralement l'arrêt de fonctionnement du four.

Comme nous venons de le voir, de nombreux problèmes peuvent résulter d'un mauvais ordonnancement de l'allumage des brûleurs.

Le brevet FR2853959 décrit un procédé de contrôle d'un four de réchauffage de sidérurgie caractérisé en ce que l'ordre d'allumage des brûleurs est choisi de façon à réduire les variations de pression dans le four et dans les circuits d'alimentation en carburant et comburant des brûleurs. Selon ce procédé, la position de la séquence de fonctionnement d'un brûleur dans l'intervalle de temps T est choisie en fonction de celle des autres brûleurs. Cette solution présente des limites notamment lorsque de nombreux brûleurs ont une séquence de fonctionnement d'une durée supérieure à la moitié de la durée de l'intervalle de temps T.

Pour définir l'ordonnancement optimal, la première contrainte à laquelle on doit faire face est celle du temps nécessaire à un ordinateur ou calculateur qui envoie les instructions d'ouverture et de fermeture aux vannes d'alimentation des brûleurs. Il est clair que dans un cadre opérationnel nous ne disposons que de quelques secondes pour trouver un ordonnancement qui répond à tous les critères énoncés plus haut, ce qui exclut l'utilisation des approches usuelles du type recherches exhaustives qui peuvent nécessiter un temps de calcul important.

Ainsi, l'invention consiste principalement en un procédé d'optimisation de l'alimentation en énergie, sur un intervalle de temps *I* de durée D, d'une installation équipée de *N* dispositifs de distribution d'énergie fonctionnant en tout ou rien et en modulation de durée, une durée de fonctionnement $\Delta i$, inférieure ou égale à *D*, étant attribuée à chacun des N dispositifs de distribution d'énergie sur l'intervalle de temps *I*, les durées $\Delta i$ étant déduites de la demande énergétique à l'installation, et fournies par un système de contrôle-commande de l'installation, caractérisé en ce que :

- la durée de fonctionnement $\Delta i$ d'un dispositif de distribution d'énergie est soit constituée d'une seule séquence de fonctionnement de durée $\Delta i$, soit divisée en plusieurs séquences de durées partielles, dont la somme est égale à $\Delta i$,
- un ordonnancement est défini sur l'intervalle de temps *I* par une répartition temporelle de l'ensemble des séquences de fonctionnement des N dispositifs de distribution d'énergie,
- et l'ordonnancement est calculé avant le début de l'intervalle de temps *I* en tenant compte des durées souhaitées $\Delta i$ de fonctionnement de chaque dispositif de distribution d'énergie,
- et que l'ordonnancement est calculé comme suit :

a/ on choisit un ordonnancement initial quelconque,
b/ on associe un numéro d'ordre de 1 à N à chaque dispositif de distribution,
c/ on recherche pour le dispositif de distribution de numéro d'ordre 1, le nombre, la ou les durées et la ou les positions sur l'intervalle de temps *I* de la ou des séquences de fonctionnement de ce dispositif de distribution qui permettent de minimiser une fonction U représentative des fluctuations du débit d'énergie sur l'intervalle de temps, les séquences des autres dispositifs conservant les positions de l'ordonnancement initial,
et on obtient un ordonnancement résultant avec le nombre, la ou les durées et la ou les positions optimales retenues pour la ou les séquences du dispositif de numéro d'ordre 1,
d) on réitère l'étape c) à partir de l'ordonnancement résultant de l'étape c) en considérant successivement les dispositifs de distribution de numéro d'ordre supérieur jusqu'au dispositif de distribution de numéro d'ordre N,

Avantageusement, le procédé d'optimisation de l'alimentation en énergie comporte les étapes supplémentaires suivantes :

e) en utilisant comme ordonnancement initial l'ordonnancement retenu à l'étape d), on associe un nouveau numéro d'ordre de 1 à N à chaque dispositif de distribution et on réitère les étapes c) et d),
f) on réitère l'étape e) un nombre de fois compatible avec le temps de calcul disponible avant le début de l'intervalle de temps.

Selon une variante particulièrement avantageuse de l'invention, le numéro d'ordre attribué à chaque dispositif de distribution est fonction des durées de fonctionnement souhaitées, le dispositif de numéro d'ordre 1 est celui dont la durée de fonctionnement souhaitée est la plus longue et le dispositif de numéro d'ordre N est celui dont la durée de fonctionnement souhaitée est la plus courte.

La fonction U à minimiser peut être la somme de la valeur absolue des fluctuations du débit d'énergie $Q_j$ autour d'une valeur moyenne $Q_{moy}$ durant l'intervalle de temps *I* :

$$U = \sum_{j=1}^{M} \left| Q_j - Q_{moy} \right|$$

On peut aussi retenir comme ordonnancement celui qui minimise une fonction U prenant en compte non seulement la fluctuation du débit d'énergie durant l'intervalle de temps *I*, mais aussi la variation du débit d'énergie entre l'instant précédant le début de l'intervalle de temps et l'instant suivant le début de l'intervalle de temps. La fonction U est alors la somme de la valeur absolue des fluctuations du débit d'énergie autour d'une valeur moyenne durant l'intervalle de temps *I* et de la variation du débit total d'énergie entre l'instant précédant le début de l'intervalle de temps et l'instant suivant le début de l'intervalle de temps.

Un autre exemple de fonction U à minimiser est constitué par la somme des carrés des déviations par rapport à la moyenne arithmétique :

$$U = \sum_{j=1}^{M} \left( Q_j - Q_{moy} \right)^2$$

Selon un autre exemple, la fonction U à minimiser est constituée par la somme de la valeur absolue des variations du débit d'énergie entre deux subdivisions successives durant l'intervalle de temps *I* :

$$U = \sum_{j=1}^{M-1} \left| Q_j - Q_{j+1} \right|$$

Selon encore un autre exemple, la fonction U à minimiser est constituée par la somme du carré des variations du débit d'énergie entre deux subdivisions successives durant l'intervalle de temps *I* :

$$U = \sum_{j=1}^{M-1}\left(Q_j - Q_{j+1}\right)^2$$

Des termes supplémentaires peuvent être ajoutés à la fonction U à minimiser.

Selon une autre possibilité, on retient comme ordonnancement celui pour lequel le débit total d'énergie engendré ne dépasse pas un seuil défini.

Avantageusement, on s'assure que le débit total d'énergie engendré par l'ordonnancement obtenu ne dépasse pas un seuil défini.

De préférence, les durées de fonctionnement souhaitées des dispositifs de distribution d'énergie sont réduites si celles-ci conduisent à un débit d'énergie total qui dépasse le seuil défini.

Avantageusement, pour chaque dispositif de distribution d'énergie, l'écart entre la durée de fonctionnement sur un intervalle de temps *I* et la durée souhaitée de fonctionnement du dispositif est limité par un écart maximal, notamment 5% de la durée de l'intervalle de temps.

De préférence les séquences pour chaque dispositif de distribution d'énergie correspondent au plus à trois changements d'état du dispositif sur un intervalle de temps *I*.

Avantageusement, deux changements d'état successifs de chaque dispositif de distribution d'énergie sont espacés d'un écart de temps minimal qui correspond par exemple au temps nécessaire à l'établissement d'un régime permanent du dispositif de distribution d'énergie, notamment de sorte de prendre en compte le temps d'ouverture ou de fermeture des vannes. L'écart de temps minimal, peut être au moins égal au vingtième de la durée *D* de l'intervalle de temps, soit *D/20.*

Pour chaque dispositif de distribution d'énergie, le dernier changement d'état durant l'intervalle de temps *I* est de préférence espacé d'un écart de temps minimal de la fin de l'intervalle, notamment au moins égal au vingtième de la durée *D* de l'intervalle de temps, soit *D/20.*

La recherche de la ou des séquences de fonctionnement d'un dispositif de distribution d'énergie qui permettent de minimiser la fonction *U* peut être effectuée dans un sous-ensemble défini de l'ensemble des séquences possibles.

De préférence, le sous-ensemble défini de l'ensemble des séquences possibles est constitué de séquences comportant au plus trois changements d'état d'un dispositif de distribution d'énergie sur un intervalle de temps *I*.

Selon un exemple de réalisation de l'invention, un ordonnancement initial est celui où tous les dispositifs de distribution d'énergie sont à l'arrêt durant l'intervalle de temps *I*.

Le numéro d'ordre attribué à chaque dispositif de distribution après la première itération peut être choisi de manière aléatoire.

L'intervalle de temps *I* est avantageusement divisé en un nombre *M* de subdivisions temporelles de durées non nécessairement égales. Les changements d'état des dispositifs de distribution ont lieu entre deux subdivisions temporelles successives.

Selon un exemple de réalisation de l'invention, les états des dispositifs de distribution sont codés selon une matrice binaire Z de taille *N x M* (*N lignes x M colonnes*) dont chacune des N lignes code l'état des différents dispositifs de distribution pendant les M subdivisions temporelles successives et chaque colonne correspond à une subdivision temporelle.

Selon un autre exemple de réalisation de l'invention, la fonction *U* s'exprime sous la forme $\sum_i\sum_j\alpha_{ij}y_iy_j$, qui est la somme pondérée des produits des paires de composantes $y_iy_j$ d'un vecteur *Y*, avec *i* et *j* des indices entiers entre 1 et *N x M,* et $\alpha_{ij}$ sont des coefficients de pondération.

Le débit total d'énergie résultant de l'ordonnancement est, à chaque instant de l'intervalle de temps *I*, la somme des débits engendrés par les dispositifs de distribution en marche à cet instant.

Selon l'invention, l'objectif de l'optimisation vise également à ce que le débit d'énergie soit monotone, croissant ou bien décroissant, durant l'intervalle de temps.

Selon l'invention, la variation du débit d'énergie, entre deux subdivisions temporelles successives, engendrée par le choix d'ordonnancement de chaque dispositif de distribution d'énergie ne doit pas être plus importante qu'une valeur maximale déterminée en fonction des caractéristiques et des réactivités des différentes parties du système. Pour des brûleurs, il s'agit notamment des caractéristiques et des réactivités des vannes de sectionnement, du ventilateur d'air de combustion, du régulateur de pression sur le réseau de gaz, de l'exhausteur de fumées et des dimensions des circuits air, gaz et fumées. La valeur maximale de la variation est de préférence inférieure ou égale à la moitié de la valeur du débit d'énergie avant variation.

De plus, l'optimisation vise à ce que le débit total d'énergie engendré ne dépasse pas un seuil défini. Ce seuil peut être différent selon l'intervalle de temps *I* considéré. Il peut par exemple résulter du débit maximal d'énergie $Q_{max}$ correspondant à la capacité du four. Il peut également être fonction du débit d'énergie de l'intervalle de temps précédent, par exemple de sorte de limiter les variations de débit entre deux intervalles de temps successifs.

Ainsi, les durées de fonctionnement souhaitées des dispositifs de distribution d'énergie, en fonction de la demande du système de contrôle-commande, sont réduites si celles-ci conduisent à un débit total qui dépasse le seuil défini.

Selon une variante de réalisation de l'invention, la recherche d'une solution, à chaque rafraîchissement des demandes énergétiques, se déroule en deux étapes, l'objectif étant de toujours proposer un ordonnancement pour chaque intervalle de temps de durée $D$ qui délivre au mieux les demandes énergétiques sans jamais provoquer l'arrêt du four :

1/ Recherche d'un premier ordonnancement où, pour chaque brûleur, l'allumage sera choisi de telle sorte qu'il n'y ait pas plus de trois changements d'état, que les durées d'établissement et d'extinction de la flamme soient respectées et qu'il n'y ait pas de changements d'état en fin de l'intervalle de temps,

2/ Ajustement de la solution suivant le principe de la méthode du recuit simulé qui consiste à favoriser les meilleurs ordonnancements sans pour autant exclure les moins bons. Le processus s'arrête au bout d'un nombre fixe d'itérations ou bien à l'issue d'un délai fixé et on garde la meilleure solution obtenue.

La liste des dispositifs de distribution d'énergie est parcourue suivant un ordre défini et pour chaque dispositif de la liste on choisit l'ordonnancement de l'allumage de ce dispositif dans le sous-ensemble des valeurs possibles qui respecte la durée d'allumage souhaitée et qui minimise la fonction $U$, compte tenu des choix d'ordonnancement déjà effectués pour les dispositifs de distribution d'énergie précédents et en considérant que les dispositifs de distribution d'énergie suivants sont à l'arrêt.

Selon une variante de réalisation de l'invention, la liste des dispositifs de distribution d'énergie est parcourue suivant un ordre aléatoire et pour chaque dispositif de la liste on choisit l'ordonnancement de l'allumage de ce dispositif dans le sous-ensemble des valeurs possibles qui respecte la durée d'allumage souhaitée et qui minimise la fonction $U$, compte tenu des ordonnancements déjà effectués pour les autres dispositifs de distribution d'énergie.

Le parcours de la liste des dispositifs de distribution d'énergie est réitéré un nombre fixe de fois, en particulier une centaine, ou bien pendant une durée limitée, en particulier une à deux secondes, et on conserve à l'issue le meilleur ordonnancement obtenu.

Selon un exemple de réalisation de l'invention, les dispositifs de distribution d'énergie sont des brûleurs et le débit d'énergie de l'installation est proportionnel au débit d'alimentation des brûleurs en combustible. Les dispositifs de distribution d'énergie peuvent aussi être constitués de résistances électriques.

Le procédé défini précédemment est avantageusement mis en oeuvre pour la conduite d'un four de réchauffage dont les dispositifs de distribution d'énergie sont constitués par des brûleurs ou des résistances électriques.

L'invention concerne également une installation équipée de dispositifs de distribution d'énergie fonctionnant en tout ou rien et en modulation de durée de fonctionnement, caractérisée en ce qu'elle comporte un ordinateur ou calculateur programmé pour commander les dispositifs de distribution d'énergie suivant un procédé tel que défini précédemment, l'installation étant agencée de manière à exécuter l'ordonnancement de l'ensemble des séquences de fonctionnement des dispositifs de distribution d'énergie, tel que défini précédemment.

L'installation est avantageusement constituée par un four industriel.

L'invention consiste, mises à part les dispositions exposées ci-dessus, en un certain nombre d'autres dispositions dont il sera plus explicitement question ci-après à propos d'exemples de réalisation, décrits avec référence aux dessins annexés, mais qui ne sont nullement limitatifs. Sur ces dessins :

Fig. 1 est une vue schématique simplifiée d'un four industriel équipé de brûleurs constituant les dispositifs de distribution d'énergie.
Fig. 2 comprend deux diagrammes simplifiés illustrant, en fonction du temps porté en abscisse, le débit d'énergie Q porté en ordonnée pour un premier ordonnancement des durées de fonctionnement de quatre brûleurs.
Fig. 3 montre, semblablement à Fig. 2, le débit d'énergie pour un ordonnancement différent des mêmes durées de fonctionnement des quatre brûleurs, seule la position de la durée de fonctionnement d'un brûleur étant modifiée.
Fig. 4 est un diagramme illustrant une courbe du débit d'énergie Q porté en ordonnée, en fonction du temps porté en abscisse.
Fig. 5 montre semblablement à Fig. 4 une courbe du débit d'énergie Q en fonction du temps, avec une forte chute du débit d'énergie sur un segment temporel réduit.
Fig. 6 est un diagramme illustrant schématiquement une pente de variation du débit d'énergie en fonction du temps.
Fig. 7 est une représentation schématique d'un intervalle de temps avec subdivisions.
Fig. 8 est une vue schématique de l'intervalle de temps de Fig. 7 dans lequel l'état « arrêt » d'un dispositif de distribution d'énergie est représenté par un trait épais confondu avec l'axe des abscisses (valeur 0).

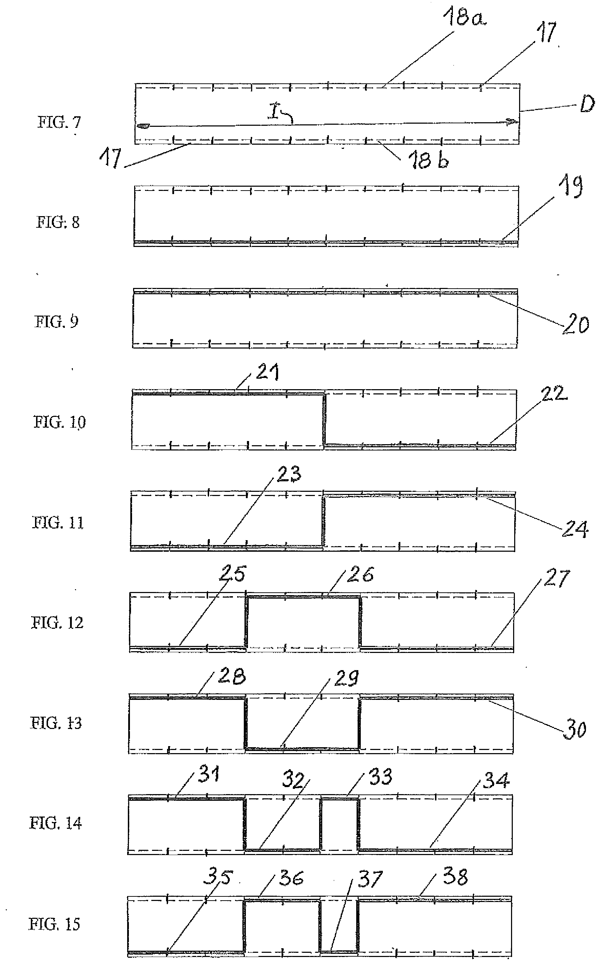

Fig. 8 est une vue schématique de l'intervalle de temps de Fig. 7 dans lequel l'état "marche" du dispositif de distribution d'énergie est représenté sous forme d'un trait épais d'ordonnée 1.
Fig. 10 représente, semblablement à Fig. 9, un changement d'état du dispositif de distribution d'énergie sur l'intervalle de temps.
Fig. 11 montre, semblablement à Fig. 10, un autre changement d'état du dispositif de distribution d'énergie.

Fig. 12 représente, semblablement à Fig. 10, deux changements d'état du dispositif de distribution d'énergie sur l'intervalle de temps considéré.

Fig. 13 montre, semblablement à Fig. 12, deux autres changements d'état du dispositif de distribution d'énergie.

Fig. 14 montre, semblablement à Fig. 12, trois changements d'état du dispositif de distribution d'énergie.

Fig. 15 montre, semblablement à Fig. 14, trois autres changements d'état du dispositif de distribution d'énergie, et,

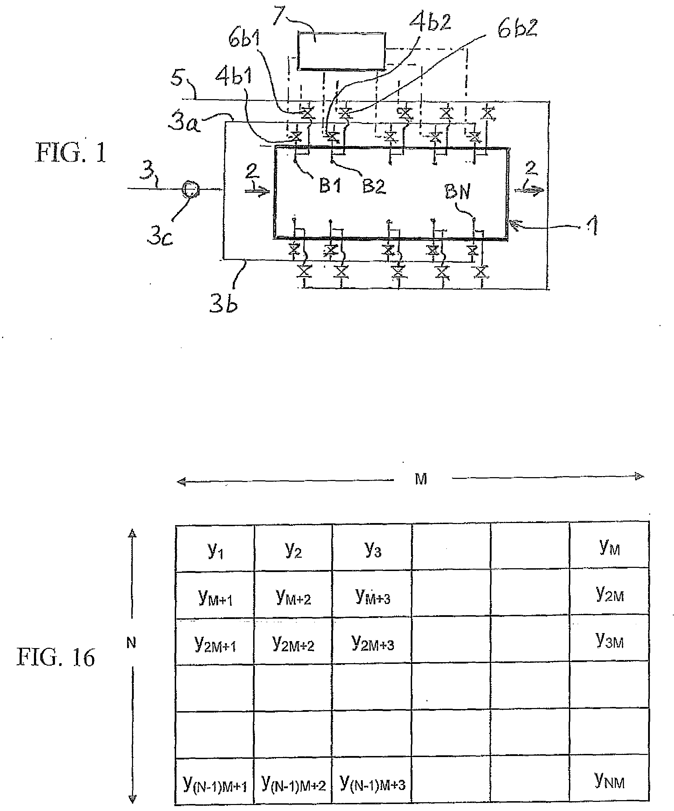

Fig. 16 est une représentation schématique du codage de l'état des dispositifs de distribution d'énergie sous forme d'une matrice binaire.

La description qui suit concerne le cas particulier d'un four industriel équipé de plusieurs brûleurs constituant les dispositifs de distribution d'énergie, mais l'invention s'applique à toute installation équipée de dispositifs de distribution d'énergie, notamment de résistances électriques, fonctionnant en tout ou rien, et en modulation de durée de fonctionnement.

En se reportant à Fig. 1, on peut voir, schématiquement représenté, un four industriel 1, notamment pour le chauffage de produits sidérurgiques qui défilent en continu selon le sens des flèches 2, en entrant sur la gauche du four 1 et en sortant sur la droite selon l'exemple dessiné. Le four est équipé de brûleurs B1, B2...BN qui fonctionnent en tout ou rien (marche/arrêt) et en modulation de durée. Le nombre N de brûleurs B1, B2... peut être de plusieurs dizaines, ces brûleurs étant répartis, lors de la conception, sur la longueur du four, selon les traitements auxquels ce four est destiné.

Chaque brûleur B1, B2...est alimenté en combustible à partir d'une canalisation commune 3a, 3b, commune à plusieurs brûleurs, par une vanne automatique de sectionnement 4b1, 4b2...Les canalisations 3a, 3b constituent des branches de dérivation d'une canalisation 3 généralement équipée d'un débitmètre 3c en amont des branches 3a, 3b.

De même, l'alimentation en comburant, notamment air ou oxygène, de chaque brûleur, est assurée par une canalisation générale 5 et par des dérivations avec vannes 6b1, 6b2... individuelles pour chaque brûleur.

Les vannes 4b1, 4b2... 6b1, 6b2... sont commandées par un ordinateur ou calculateur 7. Le pilotage du four, à partir des besoins nécessaires au chauffage des produits qui vont défiler dans ce four, est réalisé à l'aide d'un programme installé dans l'ordinateur 7. Le programme est adapté au type de produits, à leur vitesse de défilement, au traitement souhaité. Ce programme détermine, pour chaque brûleur B1, B2...BN la quantité d'énergie thermique qu'il doit délivrer sur un intervalle de temps *I* de durée *D.* Cette quantité d'énergie correspond, pour un brûleur Bi, à une durée de fonctionnement $\Delta i$, inférieure ou égale à la durée *D* de l'intervalle de temps *I.* Cette durée de fonctionnement est propre à chaque brûleur et dépend notamment de sa puissance, de sa position et du régime thermique que l'on souhaite obtenir dans le four. Les intervalles de temps *D* ont une durée limitée, par exemple de 30 à 120 secondes, et l'ordinateur 7 calcule pour chaque intervalle de temps successif des valeurs $\Delta i$ pour chaque brûleur.

L'invention vise à optimiser la fourniture d'énergie par l'ensemble des brûleurs Bi sur les intervalles de temps *I* et à limiter les fluctuations de pression dans le four et dans les réseaux d'alimentation en comburant et combustible.

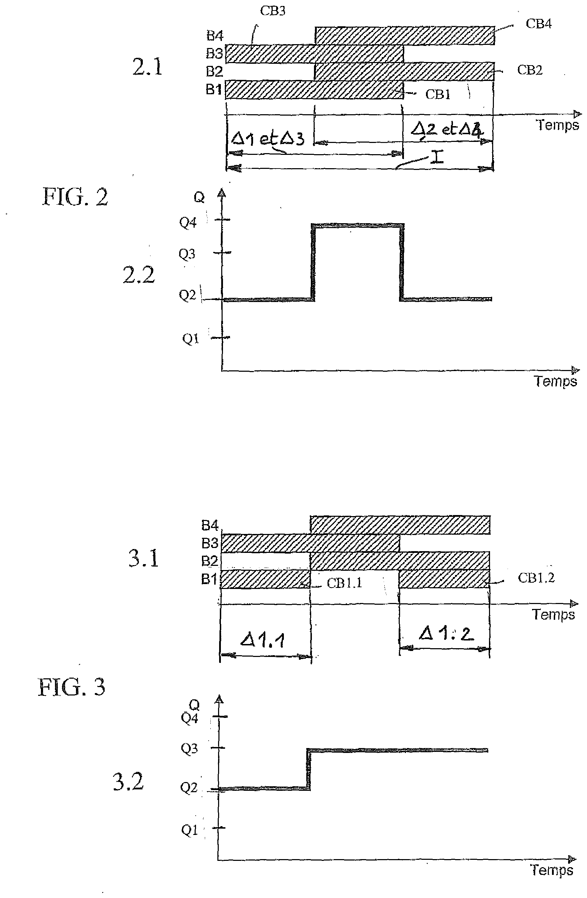

Fig. 2 comprend deux diagrammes simplifiés. Le diagramme 2.1 représente pour quatre brûleurs B1, B2, B3, B4 avec un ordonnancement possible, aléatoire, des durées de fonctionnement $\Delta 1$, $\Delta 2$, $\Delta 3$, $\Delta 4$ attribuées à chacun des quatre brûleurs sur l'intervalle de temps *I.* Les créneaux CB1, CB2, CB3, CB4 sur le diagramme 2.1 illustrent l'état de marche du brûleur. Le diagramme 2.2. représente le débit d'énergie Q délivré par les brûleurs, porté en ordonnée, en fonction du temps porté en abscisse. Dans cet exemple, les quatre brûleurs ont une même puissance unitaire.

Le diagramme 2.2 fait apparaître une plage de recouvrement des durées de fonctionnement des brûleurs B1, B2, B3, B4 ce qui conduit à un pic du débit total d'énergie à un niveau Q4. D'une manière générale, Fig. 2 fait apparaître une variation importante du débit d'énergie sur l'intervalle de temps *I* qui n'est pas favorable à des bonnes conditions de fonctionnement et de répartition des pressions dans le four 1.

Fig. 3 illustre un ordonnancement différent des durées de fonctionnement des quatre brûleurs B1, B2, B3, B4 de Fig. 2. Seul le fonctionnement du brûleur B1 a été modifié par rapport à Fig.2. Celui-ci a été réparti en deux séquences de fonctionnement distinctes $\Delta 1.1$, $\Delta 1.2$ correspondant à deux créneaux CB1.1 et CB1.2. Le diagramme 3.2 fait apparaître une plage de recouvrement des durées de fonctionnement des brûleurs B2, B3, B4, mais plus du brûleur B1, ce qui conduit à un pic du débit total d'énergie à un niveau Q3 inférieur à Q4. L'ordonnancement de Fig. 3 pour les durées de fonctionnement des quatre brûleurs permet, par rapport à celui de Fig.2, de réduire la variation de débit d'énergie, et donc les fluctuations de pression dans les canalisations d'alimentation, ainsi que dans le four, et d'améliorer les conditions de fonctionnement.

On conçoit que pour un nombre de brûleurs plus important, notamment de plusieurs dizaines, une optimisation de la répartition temporelle des durées de fonctionnement sera avantageuse pour le comportement de l'ensemble de l'installation.

Il est à noter que la durée de fonctionnement $\Delta i$ peut être constituée d'une seule séquence de fonctionnement (de durée $\Delta i$), ou peut être divisée comme expliqué à propos des Fig. 7-15 en plusieurs séquences de durées partielles inférieures à $\Delta i$, mais dont la somme est égale à $\Delta i$.

Pour optimiser l'alimentation en énergie sur l'intervalle de temps *I* de durée *D,* on détermine un ordonnancement des durées de fonctionnement Δi de chacun des N brûleurs B1, B2,...BN en procédant selon les étapes suivantes :

*Etape a)* on choisit un ordonnancement initial quelconque,
*Etape b)* on associe un numéro d'ordre de 1 à N à chaque brûleur B1... BN,
*Etape c)* on recherche pour le brûleur B1 (de numéro d'ordre 1) la ou les positions optimales de la durée de fonctionnement CB1 sur l'intervalle de temps *I* qui permettent de minimiser une fonction U représentative des fluctuations du débit d'énergie sur l'intervalle de temps *I*, les durées de fonctionnement des autres brûleurs B2... BN conservant les positions de l'ordonnancement initial,

et on obtient un ordonnancement résultant amélioré avec la ou les positions optimales retenues pour les séquences du brûleur B1.

Un exemple simplifié de ce résultat est fourni par l'ordonnancement de Fig. 3 : la position modifiée de la durée CB1 en CB1.1 et CB1.2, alors que les durées CB2, CB3 et CB4 ont conservé les positions de Fig. 2, a conduit à une diminution de l'amplitude de la variation de débit.

La fonction U peut prendre diverses formes.

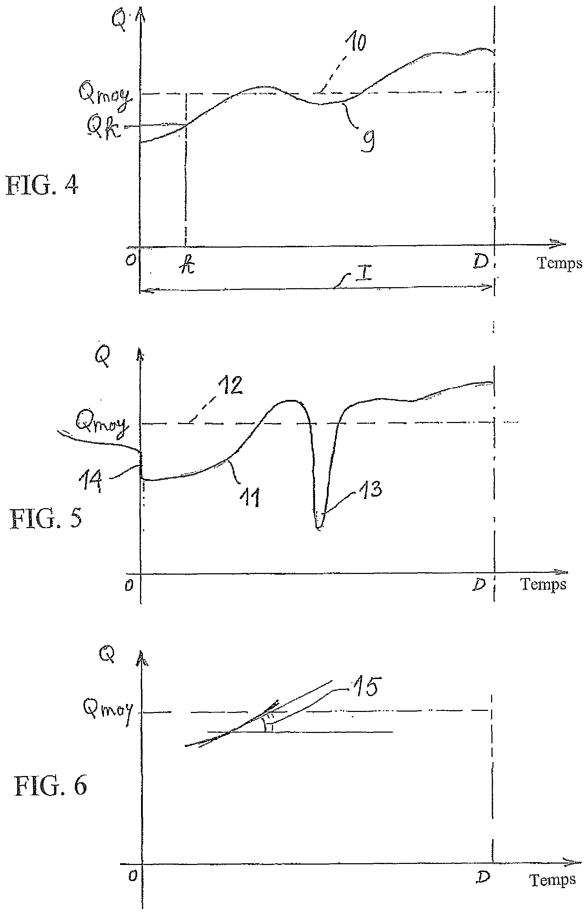

Sur Fig. 4 on a représenté par une courbe 9 le débit d'énergie Q porté en ordonnée, en fonction du temps porté en abscisse sur l'intervalle de temps *I* de durée *D,* pour un ordonnancement déterminé des brûleurs B1... BN. L'aire comprise entre la courbe 9 et l'axe des abscisses représente la quantité d'énergie fournie sur l'intervalle de temps *I* et correspond à l'instruction globale de fourniture d'énergie donnée de manière connue par l'ordinateur 7. La courbe 9 traduit des fluctuations de part et d'autre de la valeur moyenne $Q_{moyen}$ du débit sur l'intervalle *I* représentée par la ligne droite 10, parallèle à l'axe des abscisses. La courbe 9 illustre aussi les fluctuations de débit de combustible au niveau du débitmètre 3c. La ligne droite 10 détermine avec la courbe 9 des aires égales au-dessus et au-dessous de la ligne 10.

La courbe 9 peut être établie par l'ordinateur 7 qui effectue un échantillonnage de *n* échantillons, avec des pas de temps suffisamment réduits, notamment de l'ordre du centième de *D,* soit *D/100,* et qui détermine pour chacun des *n* échantillons le débit d'énergie $Q_j$ d'après les brûleurs qui seront allumés à cet instant.

Un premier exemple de fonction U que l'on cherche à minimiser est la somme de la valeur absolue des fluctuations du débit d'énergie $Q_j$ autour d'une valeur moyenne $Q_{moy}$ durant l'intervalle de temps *I :*

$$U = \sum_{j=1}^{M} \left| Q_j - Q_{moy} \right|$$

Un autre exemple de fonction U à minimiser est constitué par la somme des carrés des déviations par rapport à la moyenne arithmétique :

$$U = \sum_{j=1}^{M} \left( Q_j - Q_{moy} \right)^2$$

Le programme installé dans l'ordinateur 7 assure ce traitement de minimisation qui se traduit par un ordonnancement optimal des durées de fonctionnement des brûleurs.

Un autre critère pouvant être pris en compte pour l'optimisation de l'ordonnancement est schématiquement illustré par le diagramme de Fig. 5. La courbe 11 de débit en fonction du temps assure une quantité d'énergie totale sur l'intervalle *I* égale à celle de Fig.4 et correspondant à la valeur moyenne $Q_{moyen}$ représentée par la ligne droite 12 parallèle à l'axe des abscisses. L'énergie fournie pendant l'intervalle *I* correspond à l'aire délimitée, sur l'intervalle *I*, entre la ligne 12 et l'axe des abscisses. Du fait que les aires situées au-dessus et au-dessous de la ligne 12 entre la courbe 11 et la ligne 12 sont égales, on retrouve, avec l'ordonnancement correspondant à la courbe 11, une énergie globale fournie sur l'intervalle *I* correspondant à la valeur souhaitée mais un pic négatif 13, correspondant à une chute du débit sur un temps réduit se produit. Il peut être souhaitable d'éviter de telles chutes brutales de débit bien que l'objectif de fourniture d'énergie souhaitée sur l'intervalle de temps *I* soit assuré.

Dans ce cas, la fonction U pourra prendre en compte une limite déterminée, notamment égale à la moitié de $Q_{moyen}$, soit $Q_{moyen} / 2$, pour maintenir la valeur absolue de l'écart entre les diverses valeurs $Q_j$ de la courbe représentative du débit sur l'intervalle *I* et la valeur moyenne $Q_{moyen}$ inférieure à cette limite déterminée.

La fonction U peut en outre prendre en considération la différence de débit d'énergie (Fig. 5) entre la fin de l'intervalle précédent et le début du nouvel intervalle, correspondant au segment vertical 14, pour minimiser cette différence de débit d'énergie.

On peut retenir comme ordonnancement optimal celui qui minimise une fonction U prenant en compte non seulement la fluctuation du débit d'énergie durant l'intervalle de temps *I*, mais aussi la variation du débit d'énergie entre l'instant précédent le début de l'intervalle de temps et l'instant suivant le début de l'intervalle de temps. La fonction U peut alors être la somme de la valeur absolue des fluctuations ($Q_j$-$Q_{moyen}$) du débit d'énergie autour d'une valeur moyenne $Q_{moyen}$ durant l'intervalle de temps *I* et de la variation 14 du débit total d'énergie entre l'instant précédant le début de l'intervalle de temps et l'instant suivant le début de l'intervalle de temps Fig. 6 est un diagramme faisant apparaître la prise en compte de la pente de la variation du débit d'énergie (portée en ordonnée) en fonction du temps porté en abscisse dans la recherche d'une optimisation. L'ordonnancement optimal peut être déterminé comme étant celui qui permet d'obtenir un angle 15 d'inclinaison de la courbe de variation du débit, sur la ligne moyenne 16, qui soit le plus faible possible. La fonction U à minimiser peut alors être définie comme la pente de la tangente à la courbe de débit en un point.

Après avoir déterminé un ordonnancement avec une position optimale, ou des positions optimales dans le cas d'un fractionnement, retenue pour la durée de fonctionnement du brûleur B1 de numéro d'ordre 1, on réitère l'étape c) à partir de cet ordonnancement en considérant successivement les brûleurs de numéro d'ordre supérieur jusqu'au brûleur de numéro d'ordre N.

A chaque réitération, seule est déplacée, sur l'intervalle *I*, la position de la durée de fonctionnement du brûleur dont le numéro d'ordre est pris en considération, les autres séquences n'étant pas déplacées sur l'intervalle *I*.

*Etape e)* En utilisant comme ordonnancement initial celui retenu à *l'étape d),* on associe un nouveau numéro d'ordre de 1 à N à chaque brûleur et on réitère les *étapes c et, d/.*

*Etape f)* On réitère *l'étape e)* un nombre de fois compatible avec le temps de calcul disponible avant le début de l'intervalle de temps *I* suivant ; ce nombre de réitérations dépend de la vitesse de calcul de l'ordinateur 7.

Selon un mode de réalisation avantageux, correspondant aux Fig.7-15, l'intervalle de temps *I* est divisé en un nombre M de subdivisions temporelles de durées non nécessairement égales. Les changements d'état des brûleurs, ou plus généralement des dispositifs de distribution d'énergie, ont lieu entre deux subdivisions temporelles successives.

Pour une représentation marche/arrêt, il est possible, comme illustré sur les Fig. 7-15, de faire abstraction de la puissance et de représenter uniquement l'état marche ou arrêt du brûleur par une grandeur binaire 1 ou 0. Pour faire intervenir la puissance du brûleur, on introduit alors un coefficient de pondération $q_i$ affecté à ce brûleur, et représentatif de sa puissance.

En se reportant à Fig. 7, on peut voir schématiquement représentée, une grille d'un intervalle de temps *I* divisé en dix subdivisions temporelles 17. Les lignes horizontales en pointillé 18a et 18b représentent des états du dispositif de distribution d'énergie. Pour commenter les figures, nous considérons que le dispositif de distribution d'énergie est un brûleur. Au niveau 18a (état « 1 »), le brûleur est allumé alors qu'au niveau 18b (« état 0 »), le brûleur est éteint.

En se reportant à Fig. 8 des dessins, on peut voir schématiquement représentée la grille d'un intervalle de temps de Fig. 7. Dans celle-ci, est représentée en trait épais 19 l'évolution de l'état du brûleur. Dans cet intervalle de temps, le brûleur est en permanence à l'arrêt.

En se reportant à Fig. 9 des dessins, on peut voir schématiquement représentée la grille d'un intervalle de temps de Fig. 7. Dans celle-ci, est représentée en trait épais 20 l'évolution de l'état d'un brûleur. Dans cet intervalle de temps, le brûleur est allumé en permanence.

Dans les exemples représentés en Fig.8 et Fig.9, il n'y a aucun changement d'état du brûleur.

En se reportant à Fig. 10 des dessins, on peut voir schématiquement représentée la grille d'un intervalle de temps de Fig. 7. Dans cet intervalle de temps, le brûleur est allumé sur le tronçon 21. Entre la 5ème et la 6ème subdivision temporelle, le brûleur est éteint et maintenu à l'arrêt sur le tronçon 22.

En se reportant à Fig. 11 des dessins, on peut voir schématiquement représentée la grille d'un intervalle de temps de Fig.7. Dans cet intervalle de temps, le brûleur est éteint sur le tronçon 23. Entre la 5ème et la 6ème subdivision temporelle, le brûleur est allumé et maintenu en marche sur le tronçon 24.

Dans les exemples représentés en Fig.10 et Fig.11, il y a donc un seul changement d'état du brûleur.

En se reportant à Fig. 12 des dessins, on peut voir schématiquement représentée la grille d'un intervalle de temps de Fig. 7. Dans cet intervalle de temps, le brûleur est éteint sur le tronçon 25. Entre la 3ème et la 4ème subdivision temporelle, le brûleur est allumé et maintenu en marche sur le tronçon 26. Entre la 6ème et la 7ème subdivision temporelle, le brûleur est éteint et maintenu à l'arrêt sur le tronçon 27.

Cette Fig. 12 représente un intervalle de temps comprenant une seule séquence de fonctionnement possible selon l'invention, avec un premier changement d'état entre la 3ème et la 4ème subdivision temporelle, et un second changement d'état entre la 6ème et la 7ème subdivision temporelle. Une séquence similaire à celle de la Fig. 12 mais avec un premier changement d'état entre la 2ème et la 3ème subdivision temporelle, et un second changement d'état entre la 7ème et la 8ème subdivision temporelle fait également partie du sous-ensemble des séquences possibles selon l'invention.

En se reportant à Fig.13 des dessins, on peut voir schématiquement représentée la grille d'un intervalle de temps de Fig. 7. Dans cet intervalle de temps, le brûleur est en fonctionnement sur le tronçon 28. Entre la 3ème et la 4ème subdivision temporelle, le brûleur est éteint et maintenu à l'arrêt sur le tronçon 29. Entre la 6ème et la 7ème subdivision temporelle, le brûleur est allumé et maintenu en marche sur le tronçon 30.

Dans les exemples représentés en Fig.12 et Fig.13, il y a donc deux changements d'état du brûleur.

En se reportant à Fig. 14 des dessins, on peut voir schématiquement représentée la grille d'un intervalle de temps de Fig. 7. Dans cet intervalle de temps, le brûleur est en fonctionnement sur le tronçon 31. Entre la 3ème et la 4ème subdivision temporelle, le brûleur est éteint et maintenu à l'arrêt sur le tronçon 32. Entre la 5ème et la 6ème subdivision temporelle, le brûleur est allumé et maintenu en marche sur le tronçon 33. Entre la 6ème et la 7ème subdivision temporelle, le brûleur est éteint et maintenu à l'arrêt sur le tronçon 34.

En se reportant à Fig. 15 des dessins, on peut voir schématiquement représentée la grille d'un intervalle de temps de Fig. 7. Dans cet intervalle de temps, le brûleur est à l'arrêt sur le tronçon 35. Entre la 3ème et la 4ème subdivision temporelle, le brûleur est allumé et maintenu en marche sur le tronçon 36. Entre la 5ème et la 6ème subdivision temporelle, le brûleur est éteint et maintenu à l'arrêt sur le tronçon 37. Entre la 6ème et la 7ème subdivision temporelle, le brûleur est allumé et maintenu en fonctionnement sur le tronçon 38.

Dans les exemples représentés en Fig.14 et Fig.15, il y a donc trois changements d'état du brûleur.

Les profils de changement d'état d'un dispositif de distribution d'énergie représentés en Fig. 10 à 15 sont donnés à titre d'exemple non limitatif, chaque changement d'état pouvant se produire à la fin d'une autre subdivision temporelle.

L'écart de temps entre deux changements d'état, c'est-à-dire la distance horizontale entre deux segments verticaux successifs sur Fig.12 à 15, est supérieur à une limite déterminée, en particulier au vingtième de la durée $D$ de l'intervalle, soit supérieur à $D/20$.

Le dernier changement d'état sur l'intervalle $I$ est séparé de la fin de cet intervalle $I$ d'un écart de temps minimum, en particulier au moins égal au vingtième de la durée $D$ de l'intervalle, soit $D/20$.

Selon un exemple de réalisation de l'invention représenté en Fig. 16, les états des dispositifs de distribution sont codés selon une matrice binaire $Z$ de taille $N$ x $M$, ayant $N$ lignes et $M$ colonnes dont chacune des $N$ lignes code l'état des différents brûleurs pendant les $M$ subdivisions temporelles successives, chaque colonne correspondant à une subdivision temporelle.

Les brûleurs ont des puissances différentes et sont avantageusement affectés d'un coefficient de pondération $q_i$ représentatif de la puissance du brûleur considéré. En pratique $q_i$ ne dépend pas de la subdivision temporelle puisque la puissance du brûleur est constante.

Chaque élément de la matrice Z est désigné par $y_k$ avec k un indice entier variant entre 1 et $NxM$, *suivant une numérotation par ligne comme représenté en Fig.16*. Les éléments $y_k$ ont pour valeur 0 ou 1.

Pour une subdivision temporelle j correspondant à une colonne de la matrice Z, le débit total d'énergie $Q_j$ durant cette subdivision est égal à :

$$Q_j = \sum_{i=1}^{N} y_{j+(i-1)M} \times q_i$$

La fonction U à minimiser peut être la somme de la valeur absolue des fluctuations du débit d'énergie pour une subdivision autour d'une valeur moyenne $Q_{moy}$ durant l'intervalle de temps $I$. Cette fonction U s'écrit :

$$U = \sum_{j=1}^{M} \left| Q_j - Q_{moy} \right|$$

Selon un autre mode de réalisation de l'invention, la fonction U peut être la somme du carré des fluctuations du débit d'énergie pour une subdivision autour d'une valeur moyenne $Q_{moy}$ durant l'intervalle de temps $I$. Elle s'écrit alors :

$$U = \sum_{j=1}^{M} \left( Q_j - Q_{moy} \right)^2$$

Selon un autre mode de réalisation de l'invention, la fonction U à minimiser peut être la somme de la valeur absolue des variations du débit d'énergie entre deux subdivisions successives durant l'intervalle de temps $I$. Cette fonction U s'écrit :

$$U = \sum_{j=1}^{M-1} \left| Q_j - Q_{j+1} \right|$$

Selon un autre mode de réalisation de l'invention, la fonction U à minimiser peut être la somme du carré des variations du débit d'énergie entre deux subdivisions successives durant l'intervalle de temps $I$. Cette fonction U s'écrit

$$U = \sum_{j=1}^{M-1} \left( Q_j - Q_{j+1} \right)^2$$

Il est à noter que la fonction U peut également prendre l'une des formes décrites précédemment à laquelle seraient ajoutés des termes supplémentaires, par exemple la variation entre la première subdivision temporelle d'un intervalle de temps et la dernière subdivision temporelle de l'intervalle de temps précédent.

Selon un autre exemple de réalisation de l'invention, la fonction *U* peut s'exprimer sous la forme $\sum_i \sum_j \alpha_{ij} y_i y_j$, qui est la somme pondérée des produits des paires de composantes d'un vecteur *Y,* avec *i* et *j* des indices entiers entre 1 et *N x M,* et $\alpha_{ij}$ sont des coefficients de pondération.

L'invention permet d'obtenir un rendement optimal d'un four à brûleurs fonctionnant en tout ou rien, et en modulation de durée. L'invention assure une chute des fluctuations de débit, une meilleure combustion, et une diminution des rejets polluants. Lors d'un démarrage de four, les meilleures conditions d'exploitation sont obtenues très rapidement et automatiquement, et sont maintenues.

A titre d'exemple, sur un four de réchauffage d'une capacité de 400 t/h, le passage d'un procédé d'ordonnancement de l'allumage des brûleurs selon FR2853959 à celui selon l'invention permet de réduire d'environ 30% les fluctuations de débits de comburant et de combustible.

## Revendications

1. Procédé d'optimisation de l'alimentation en énergie, sur un intervalle de temps *I* de durée *D,* d'une installation équipée de *N* dispositifs de distribution d'énergie fonctionnant en tout ou rien et en modulation de durée, une durée de fonctionnement $\Delta i$, inférieure ou égale à *D,* étant attribuée à chacun des N dispositifs de distribution d'énergie sur l'intervalle de temps *I*, les durées $\Delta i$ étant déduites de la demande énergétique à l'installation, et fournies par un système de contrôle-commande de l'installation, **caractérisé en ce que** :

   - la durée de fonctionnement $\Delta i$ d'un dispositif de distribution d'énergie (B1,B2...BN) est soit constituée d'une seule séquence de fonctionnement de durée $\Delta i$, soit divisée en plusieurs séquences de durées partielles, dont la somme est égale à $\Delta i$,
   - un ordonnancement est défini sur l'intervalle de temps *I* par une répartition temporelle de l'ensemble des séquences de fonctionnement des N dispositifs de distribution d'énergie,
   - l'ordonnancement est calculé avant le début de l'intervalle de temps *I* en tenant compte des durées souhaitées $\Delta i$ de fonctionnement de chaque dispositif de distribution d'énergie.
   - et l'ordonnancement est calculé comme suit :

      a/ on choisit un ordonnancement initial quelconque,
      b/ on associe un numéro d'ordre de 1 à N à chaque dispositif de distribution,
      c/ on recherche pour le dispositif de distribution de numéro d'ordre 1, le nombre, la ou les durées et la ou les positions sur l'intervalle de temps *I* de la ou des séquences de fonctionnement de ce dispositif de distribution qui permettent de minimiser une fonction U représentative des fluctuations du débit d'énergie sur l'intervalle de temps, les séquences des autres dispositifs conservant les positions de l'ordonnancement initial,
   et on obtient un ordonnancement résultant avec le nombre, la ou les durées et la ou les positions optimales retenues pour les séquences du dispositif de numéro d'ordre 1,
   d/ on réitère l'étape (c) à partir de l'ordonnancement résultant de l'étape (c) en considérant successivement les dispositifs de distribution de numéro d'ordre supérieur jusqu'au dispositif de distribution de numéro d'ordre N,

2. Procédé selon la revendication 1, **caractérisé en ce qu'**il comporte les étapes supplémentaires suivantes :

   e/ en utilisant comme ordonnancement initial l'ordonnancement retenu à l'étape (d), on associe un nouveau numéro d'ordre de 1 à N à chaque dispositif de distribution et on réitère les étapes (c) et (d),
   g/ on réitère l'étape (e) un nombre de fois compatible avec le temps de calcul disponible avant le début de l'intervalle de temps.

3. Procédé selon la revendication 1, **caractérisé en ce que** le numéro d'ordre attribué à chaque dispositif de distribution est fonction des durées de fonctionnement souhaitées $\Delta i$, le dispositif de numéro d'ordre 1 étant celui dont la durée de fonctionnement souhaitée $\Delta 1$ est la plus longue et le dispositif de numéro d'ordre N étant celui dont la durée de fonctionnement souhaitée $\Delta N$ est la plus courte.

4. Procédé selon l'une quelconque des revendications précédentes, **caractérisé en ce que** l'intervalle de temps *I* est divisé en un nombre *M* de subdivisions temporelles (17) de durées non nécessairement égales.

5. Procédé selon la revendication 4, **caractérisé en ce que** les états des dispositifs de distribution sont codés selon une matrice binaire *Z* de taille *N x M* (*N* lignes et *M* colonnes) dont chacune des *N* lignes code l'état des différents dispositifs de distribution pendant les subdivisions temporelles successives et chaque colonne correspond à une subdivision temporelle,

**6.** Procédé selon l'une quelconque des revendications précédentes, **caractérisé en ce que** la fonction U à minimiser est la somme de la valeur absolue des fluctuations du débit d'énergie $Q_j$ autour d'une valeur moyenne $Q_{moy}$ durant l'intervalle de temps $I$ :

$$U = \sum_{j=1}^{M} \left| Q_j - Q_{moy} \right|$$

**7.** Procédé selon l'une quelconque des revendications 1 à 5, **caractérisé en ce que** la fonction U à minimiser est constituée par la somme des carrés des déviations par rapport à la moyenne arithmétique :

$$U = \sum_{j=1}^{M} \left( Q_j - Q_{moy} \right)^2$$

**8.** Procédé selon l'une quelconque des revendications 1 à 5, **caractérisé en ce que** la fonction U à minimiser est constituée par la somme de la valeur absolue des variations du débit d'énergie entre deux subdivisions successives durant l'intervalle de temps $I$ :

$$U = \sum_{j=1}^{M-1} \left| Q_j - Q_{j+1} \right|$$

**9.** Procédé selon l'une quelconque des revendications 1 à 5, **caractérisé en ce que** la fonction U à minimiser est constituée par la somme du carré des variations du débit d'énergie entre deux subdivisions successives durant l'intervalle de temps $I$ :

$$U = \sum_{j=1}^{M-1} \left( Q_j - Q_{j+1} \right)^2$$

**10.** Procédé selon l'une des revendications 6 à 9, **caractérisé en ce qu'**il est ajouté des termes supplémentaires à la fonction U à minimiser.

**11.** Procédé selon la revendication 1, **caractérisé en ce que** la fonction U à minimiser prend en compte non seulement la fluctuation du débit d'énergie durant l'intervalle de temps $I$, mais aussi la variation (14) du débit d'énergie entre l'instant précédant le début de l'intervalle de temps et l'instant suivant le début de l'intervalle de temps, la fonction U étant la somme de la valeur absolue des fluctuations du débit d'énergie autour d'une valeur moyenne durant l'intervalle de temps $I$ et de la variation (14) du débit total d'énergie entre l'instant précédant le début de l'intervalle de temps et l'instant suivant le début de l'intervalle de temps.

**12.** Procédé selon l'une quelconque des revendications précédentes, **caractérisé en ce que** l'on s'assure que le débit total d'énergie engendré par l'ordonnancement obtenu ne dépasse pas un seuil défini.

**13.** Procédé selon l'une quelconque des revendications précédentes, **caractérisé en ce que** les durées de fonctionnement souhaitées des dispositifs de distribution d'énergie sont réduites si celles-ci conduisent à un débit total qui dépasse un seuil défini.

**14.** Procédé selon l'une quelconque des revendications précédentes, **caractérisé en ce que** pour chaque dispositif de distribution d'énergie, l'écart entre la durée de fonctionnement sur un intervalle de temps $I$ et la durée souhaitée est limitée par un écart maximal, en particulier de 5% de la durée de l'intervalle de temps.

**15.** Procédé selon l'une quelconque des revendications précédentes, **caractérisé en ce que** les séquences pour chaque dispositif de distribution d'énergie correspondent au plus à trois changements d'état du dispositif sur un intervalle de temps $I$.

**16.** Procédé selon l'une quelconque des revendications précédentes, **caractérisé en ce que** deux changements d'état successifs de chaque dispositif de distribution d'énergie sont espacés d'un écart de temps minimal, en particulier au moins égal au vingtième de la durée $D$ de l'intervalle de temps, soit $D/20$.

**17.** Procédé selon l'une quelconque des revendications précédentes, **caractérisé en ce que**, pour chaque dispositif de distribution d'énergie, le dernier changement d'état durant l'intervalle de temps $I$ est espacé d'un écart de temps minimal de la fin de l'intervalle, en particulier au moins égal au vingtième de la durée $D$ de l'intervalle de temps, soit $D/20$.

**18.** Procédé selon l'une quelconque des revendications précédentes, **caractérisé en ce que** l'ordonnancement initial est celui où tous les dispositifs de distribution d'énergie sont à l'arrêt durant l'intervalle de temps.

**19.** Procédé selon l'une quelconque des revendications précédentes, **caractérisé en ce que** le numéro d'ordre attribué à chaque dispositif de distribution après la première itération est aléatoire.

**20.** Procédé selon la revendication 4, **caractérisé en ce que** les changements d'état des dispositifs de distribution ont lieu entre deux subdivisions temporelles successives.

21. Procédé l'une quelconque des revendications précédentes, **caractérisé en ce que** les dispositifs de distribution d'énergie sont des brûleurs et **en ce que** le débit de l'alimentation en énergie de l'installation est proportionnel au débit d'alimentation des brûleurs en combustible.

22. Procédé selon la revendication 1, **caractérisé en ce que** la fonction $U$ s'exprime sous la forme $\sum_i \sum_j \alpha_{ij} y_i y_j$, qui est la somme pondérée des produits des paires de composantes d'un vecteur $Y$, avec $i$ et $j$ des indices entiers entre 1 et $N \times M$, et $\alpha_{ij}$ sont des coefficients de pondérations.

23. Procédé selon l'une quelconque des revendications précédentes pour la conduite d'un four de réchauffage dont les dispositifs de distribution d'énergie sont constitués par des brûleurs ou des résistances électriques.

24. Installation équipée de dispositifs de distribution d'énergie fonctionnant en tout ou rien et en modulation de durée de fonctionnement, **caractérisée en ce qu'**elle comporte un ordinateur ou calculateur programmé pour commander les dispositifs de distribution d'énergie suivant un procédé selon l'une quelconque des revendications précédentes, l'installation étant agencée de manière à exécuter l'ordonnancement de l'ensemble des séquences de fonctionnement des dispositifs de distribution d'énergie, tel que défini dans les revendications précédentes.

25. Installation selon la revendication 24, constituée par un four industriel.

**Patentansprüche**

1. Verfahren zur Optimierung der Energieversorgung einer Anlage, die mit N im Zweipunkt- und Stetigbetrieb funktionierenden Energieverteilungsvorrichtungen ausgestattet ist, in einem Zeitintervall $I$ mit der Dauer $D$, wobei jeder der N Energieverteilungsvorrichtungen im Zeitintervall $I$ eine Betriebsdauer $\Delta i$ kleiner/gleich D zugeordnet wird, wobei die jeweilige Dauer $\Delta i$ vom Energiebedarf der Anlage abgeleitet und durch ein Steuerungssystem der Anlage angegeben wird, **dadurch gekennzeichnet, dass**:

   - die Betriebsdauer $\Delta i$ einer Energieverteilungsvorrichtung (B1, B2... BN) entweder aus einer einzigen Betriebssequenz mit der Dauer $\Delta i$ besteht, oder unterteilt ist in mehrere Teilsequenzen mit einer jeweiligen Dauer, deren Summe gleich $\Delta i$ ist,

   - durch eine zeitliche Verteilung der Betriebssequenzen der N Energieverteilungsvorrichtungen eine Planung für das Zeitintervall $I$ festgelegt wird,
   - die Planung vor Beginn des Zeitintervalls $I$ unter Berücksichtigung der für die jeweilige Energieverteilungsvorrichtung gewünschten Betriebsdauer $\Delta i$ berechnet wird.
   - und die Planung wie folgt berechnet wird:

      a/ Man wählt einer beliebige Ausgangsplanung.
      b/ Man verknüpft mit jeder Verteilungsvorrichtung eine laufende Nummer von 1 bis N.
      c/ Man sucht für die Verteilungsvorrichtung mit der laufenden Nummer 1 im Zeitintervall $I$ Anzahl, Dauer und Position der Betriebssequenz(en) dieser Verteilungsvorrichtung, die eine Minimierung einer für die Schwankungen des Energiedurchsatzes im Zeitintervall repräsentativen Funktion U ermöglichen, wobei die Sequenzen der anderen Vorrichtungen die Positionen der Ausgangsplanung beibehalten,
      und man erhält eine Planung mit optimaler Anzahl, Dauer oder Position für die Sequenzen der Vorrichtung mit der laufenden Nummer 1.
      d/ Man wiederholt Schritt (c) ausgehend von der Planung, die aus Schritt (10) resultiert, wobei nacheinander die Verteilungsvorrichtungen mit der jeweils höheren laufen Nummer bis zur Verteilungsvorrichtung mit der laufenden Nummer N berücksichtigt werden.

2. Verfahren nach Anspruch 1, **dadurch gekennzeichnet, dass** es die folgenden zusätzlichen Schritte umfasst:

   e/ Unter Benutzung der in Schritt (d) festgehaltenen Planung als Ausgangsplanung verknüpft man mit jeder Verteilungsvorrichtung eine neue laufende Nummer zwischen 1 und N und wiederholt die Schritte (c) und (d).
   g/ Man wiederholt Schritt (e) so viele Male, wie dies mit der vor Beginn des Zeitintervalls verfügbaren Berechnungszeit vereinbar ist.

3. Verfahren nach Anspruch 1, **dadurch gekennzeichnet, dass** die jeder Verteilungsvorrichtung zugeordnete laufende Nummer abhängig ist von der gewünschten jeweiligen Betriebsdauer $\Delta i$, wobei die Vorrichtung mit der laufenden Nummer 1 die Vorrichtung mit der längsten gewünschten Betriebsdauer $\Delta 1$, und die Vorrichtung mit der laufenden Nummer N die mit der kürzestem gewünschten Betriebsdauer $\Delta N$ ist.

**4.** Verfahren nach einem der vorhergehenden Ansprüche, **dadurch gekennzeichnet, dass** das Zeitintervall *I* durch eine Anzahl *M* zeitlicher Unterteilungen (17) dividiert wird, deren jeweilige Dauer nicht unbedingt gleich lang sein muss.

**5.** Verfahren nach Anspruch 4, **dadurch gekennzeichnet, dass** die Stati der Verteilungsvorrichtungen nach einer binären Matrix Z mit der Größe *N x M* (*N* Zeilen und *M* Spalten) codiert ist, in der jede der N Zeilen des Status der verschiedenen Verteilungsvorrichtungen in den aufeinanderfolgenden zeitlichen Unterteilungen codiert und jede Spalte einer zeitlichen Unterteilung entspricht.

**6.** Verfahren nach einem der vorhergehenden Ansprüche, **dadurch gekennzeichnet, dass** die zu minimierende Funktion U die Summe der absoluten Werte der Schwankungen des Energiedurchsatzes Qj um einen Mittelwert $Q_{moy}$ im Zeitintervall *I* herum ist:

$$U = \sum_{j=1}^{M} \left| Q_j - Q_{moy} \right|$$

**7.** Verfahren nach einem der Ansprüche 1 bis 5, **dadurch gekennzeichnet, dass** die zu minimierende Funktion U gebildet wird aus der Summe der Quadratzahlen der Abweichungen vom arithmetischen Mittel:

$$U = \sum_{j=1}^{M} \left( Q_j - Q_{moy} \right)^2$$

**8.** Verfahren nach einem der Ansprüche 1 bis 5, **dadurch gekennzeichnet, dass** die zu minimierende Funktion U gebildet wird aus der Summe der absoluten Werte der Energiedurchsatzschwankungen zwischen zwei im Zeitintervall *I* aufeinanderfolgenden Unterteilungen:

$$U = \sum_{j=1}^{M-1} \left| Q_j - Q_{j+1} \right|$$

**9.** Verfahren nach einem der Ansprüche 1 bis 5, **dadurch gekennzeichnet, dass** die zu minimierende Funktion U gebildet wird aus der Summe der Quadratzahlen der Energiedurchsatzschwankungen zwischen zwei im Zeitintervall *I* aufeinanderfolgenden Subdivisionen:

$$U = \sum_{j=1}^{M-1} \left( Q_j - Q_{j+1} \right)^2$$

**10.** Verfahren nach einem der Ansprüche 6 bis 9, **dadurch gekennzeichnet, dass** zu der zu minimierenden Funktion U weitere Terme hinzugefügt werden.

**11.** Verfahren nach Anspruch 1, **dadurch gekennzeichnet, dass** die zu minimierende Funktion U nicht nur die Schwankung des Energiedurchsatzes im Zeitintervall *I* berücksichtigt, sondern auch die Schwankung (14) des Energiedurchsatzes zwischen dem Zeitpunkt vor Beginn des Zeitintervalls und dem Zeitpunkt nach Beginn des Zeitintervalls, wobei die Funktion U die Summe der absoluten Werte der Energiedurchsatzschwankungen um einen Mittelwert im Zeitintervall *I* herum und der Schwankung (14) des Gesamtenergiedurchsatzes zwischen dem Zeitpunkt vor Beginn des Zeitintervalls und dem Zeitpunkt nach Beginn des Zeitintervalls ist.

**12.** Verfahren nach einem der vorhergehenden Ansprüche, **dadurch gekennzeichnet, dass** man sicherstellt, dass der durch die erzielte Planung entstehende Gesamtenergiedurchsatz einen festgelegten Grenzwert nicht überschreitet.

**13.** Verfahren nach einem der vorhergehenden Ansprüche, **dadurch gekennzeichnet, dass** die gewünschte Betriebsdauer der jeweiligen Energieverteilungsvorrichtungen verringert wird, wenn diese zu einem Gesamtdurchsatz führt, der einen festgelegten Grenzwert überschreitet.

**14.** Verfahren nach einem der vorhergehenden Ansprüche, **dadurch gekennzeichnet, dass** die Abweichung bei jeder Energieverteilungsvorrichtung zwischen der Betriebsdauer in einem Zeitintervall *I* und der gewünschten Dauer begrenzt ist auf eine maximale Abweichung von insbesondere 5 % der Dauer des Zeitintervalls.

**15.** Verfahren nach einem der vorhergehenden Ansprüche, **dadurch gekennzeichnet, dass** die Sequenzen bei jeder Energieverteilungsvorrichtung höchstens drei Statusänderungen der Vorrichtung in einem Zeitintervall *I* entsprechen.

**16.** Verfahren nach einem der vorhergehenden Ansprüche, **dadurch gekennzeichnet, dass** zwischen zwei aufeinanderfolgenden Statusänderungen jeder Energieverteilungsvorrichtung eine Mindestzeitdifferenz besteht, die insbesondere zumindest ein Zwanzigstel der Dauer *D* des Zeitintervalls, d.h. D/20, ist.

**17.** Verfahren nach einem der vorhergehenden Ansprüche, **dadurch gekennzeichnet, dass** bei jeder Energieverteilungsvorrichtung zischen der letzten Statusänderung im Zeitintervall *I* und dem Ende des Intervalls eine Mindestzeitdifferenz besteht, die insbesondere zumindest ein Zwanzigstel der Dauer *D* des Zeitintervalls, d.h. D/20, ist.

**18.** Verfahren nach einem der vorhergehenden Ansprüche, **dadurch gekennzeichnet, dass** die Ausgangsplanung die Planung ist, in der alle Energieverteilungsvorrichtungen im Zeitintervall ausgeschaltet sind.

**19.** Verfahren nach einem der vorhergehenden Ansprüche, **dadurch gekennzeichnet, dass** die jeder Verteilungsvorrichtung nach der ersten Wiederholung zugeordnete laufende Nummer beliebig ist.

**20.** Verfahren nach Anspruch 4, **dadurch gekennzeichnet, dass** die Statusänderungen der Verteilungsvorrichtungen zwischen zwei aufeinanderfolgenden zeitlichen Unterteilungen stattfinden.

**21.** Verfahren nach einem der vorhergehenden Ansprüche, **dadurch gekennzeichnet, dass** die Energieverteilungsvorrichtungen Brenner sind, und dadurch, dass sich der Energieversorgungsdurchsatz der Anlage proportional zum Brennstoffversorgungsdurchsatz der Brenner verhält.

**22.** Verfahren nach Anspruch 1, **dadurch gekennzeichnet, dass** die Funktion U ausgedrückt wird in der Form $\sum_i \sum_j \alpha_{ij} \, \gamma_i \, \gamma_j$ als gewichtete Summe der Produkte der Komponentenpaare eines Vektors $\gamma$, wobei *i* und *j* ganze Messzahlen zwischen 1 und N x M, und $\alpha_{ij}$ Gewichtungskoeffizienten sind.

**23.** Verfahren nach einem der vorhergehenden Ansprüche zum Betreiben eines Wärmofens, dessen Energieverteilungsvorrichtungen aus Brennern oder elektrischen Widerständen bestehen.

**24.** Anlage, die ausgestattet ist mit Energieverteilungsvorrichtungen mit Zweipunkt- und Stetigbetrieb, **dadurch gekennzeichnet, dass** sie einen Computer oder Rechner umfasst, der so programmiert ist, dass die Energieverteilungsvorrichtungen nach einem Verfahren gemäß den vorhergehenden Ansprüchen gesteuert wird, wobei die Anlage so angeordnet ist, dass die Planung der Betriebssequenzen der Energieverteilungsvorrichtungen gemäß der Definition in den vorhergehenden Ansprüchen ausgeführt wird.

**25.** Anlage nach Anspruch 24 bestehend aus einem Industrieofen.

**Claims**

**1.** A method for optimizing the energy supply, over a time interval *I* of duration *D,* of an installation equipped with *N* energy distribution devices operating in all-or-nothing mode and in duration modulation, with an operation duration $\Delta I$, which is equal to or smaller than *D,* being allocated to each one of the N energy distribution devices over the time interval *I*, with the durations $\Delta I$ being deduced from the energy demand of the installation, and provided by a command-control system of the installation, **characterized in that**:

- the operation time duration $\Delta I$ of an energy distribution device (B1, B2,..., BN) is either consisting of a single operating sequence of a duration $\Delta I$, or divided into several sequences of partial durations, the sum of which is equal to $\Delta I$,
- a scheduling is defined over the time interval *I* by a temporal allotment of the set of operating sequences of the N energy distribution devices,
- the scheduling is calculated before the start of the time interval *I* by taking account of the desired operation durations $\Delta I$ of **operation** each energy distribution device,
- and the scheduling is calculated as follows:

a/ any **arbitrary** initial scheduling is selected,

b/ an order number between 1 and N is associated with each distribution device,

c/ for the distribution device of order number 1, the number, the duration (s) and the position (s) over the time interval *I* of the operating sequence(s) of this distribution device which make it possible to minimize a function U representative of the fluctuations of the energy throughput over the time interval **are searched for,** with the sequences of the other devices **maintaining** the positions of the initial schedule, and a resulting optimal scheduling is obtained with the number, the duration(s) and the optimal position(s) **maintained** for the sequences of the distribution device of order number 1,

d/ the step (c) is repeated on the basis of the schedule resulting from the step (c), **by** successively taking account of the distribution devices of higher order number up to the distribution device of order number N.

**2.** A method according to claim 1, **characterized in that** it includes the following additional steps:

e/ using, as the initial schedule, the schedule retained at the step (d), a new order number between 1 and N is associated with each distribution device and the steps (c) and (d) are repeated,

g/ the step (e) is repeated a number of times compatible with the computational time available before the start of the time interval.

3. A method according to claim 1, **characterized in that** the order number allocated to each distribution device depends on the desired operating times Δi, with the distribution device of order number 1 being the one, the desired operating time Δ1 of which is the longest one and the distribution device of order number N being the one the desired operating time ΔN of which is the shortest one.

4. A method according to any one of the preceding claims, **characterized in that** the time interval *I* is divided into a number *M* of time subdivisions (17) not necessarily having equal durations.

5. A method according to claim 4, **characterized in that** the states of the distribution devices are encoded according to a binary matrix Z of size *N×M* (*N* rows and *M* columns), with each of the N lines encoding the states of the various distribution devices during the successive time subdivisions, and each column corresponding to a time subdivision.

6. A method according to any one of the preceding claims, **characterized in that** the function U to be minimized is the sum of the absolute value of the fluctuations of the energy throughput Qj around an average value $Q_{avg}$ during the time interval *I*:

$$U = \sum_{j=1}^{M} |Q_j - Q_{avg}|$$

7. A method according to any one of claims 1 to 5, **characterized in that** the function U to be minimized is formed by the sum of squares of deviations from the arithmetic mean:

$$U = \sum_{j=1}^{M} \left(Q_j - Q_{avg}\right)^2$$

8. A method according to any one of claims 1 to 5, **characterized in that** the function U to be minimized is formed by the sum of the absolute values of the variations in the energy throughput between two successive subdivisions during the time interval *I*:

$$U = \sum_{j=1}^{M-1} |Q_j - Q_{j+1}|$$

9. A method according to any one of claims 1 to 5, **characterized in that** the function U to be minimized is formed by the sum of the square of the variations in the energy throughput between two successive subdivisions during the time interval *I*:

$$U = \sum_{j=1}^{M-1} \left(Q_j - Q_{j+1}\right)^2$$

10. A method according to one of claims 6 to 9, **characterized in that** additional terms are added to the function U to be minimized.

11. A method according to claim 1, **characterized in that** the function U to be minimized takes account not only the fluctuation of the energy throughput during the time interval *I,* but also the variation (14) of the energy throughput between the moment before the start of the time interval and the moment following the start of the time interval, with the function U being the sum of the absolute values of the fluctuations of the energy throughput around an average value during the time interval *I* and the variation (14) of the total energy throughput between the moment before the start of the time interval and the moment following the start of the time interval.

12. A method according to any one of the preceding claims, **characterized in that** it is ensured that the total energy throughput generated by the schedule obtained does not exceed a defined threshold.

13. A method according to any one of the preceding claims, **characterized in that** the desired operating times of the energy distribution devices are reduced if they lead to a total throughput that exceeds a defined threshold.

14. A method according to any one of the preceding claims, **characterized in that**, for each energy distribution device, the difference between the operating time over a time interval *I* and the desired duration is limited by a maximum deviation, in particular equal to 5% of the duration of the time interval.

15. A method according to any one of the preceding claims, **characterized in that** the sequences for each energy distribution device correspond at most to three changes in the state of the device over a time interval *I*.

**16.** A method according to any one of the preceding claims, **characterized in that** two successive changes in the state of each energy distribution device are spaced by a minimum time difference, in particular at least equal to one twentieth of the duration *D* of the time interval, i.e. *D/20.*

**17.** A method according to any one of the preceding claims, **characterized in that**, for each energy distribution device, the last change in the state over the time interval *I* is spaced by a minimum time difference at the end of the interval, in particular at least equal to one twentieth of the duration *D* of the time interval, i.e. *D/20.*

**18.** A method according to any one of the preceding claims, **characterized in that** the initial schedule is one where all the energy distribution devices are stopped over the time interval.

**19.** A method according to any one of the preceding claims, **characterized in that** the order number allocated to each distribution device after the first iteration is a random number.

**20.** A method according to claim 4, **characterized in that** the changes in the state of the distribution devices take place between two successive time subdivisions.

**21.** A method according to any one of the preceding claims, **characterized in that** the energy distribution devices are burners and **in that** the rate of the energy supply to the installation is proportional to the rate of the fuel supply to the burners.

**22.** A method according to claim 1, **characterized in that** the function U is expressed as $\sum i \sum j \; \alpha ij \; \gamma i \; \gamma j,$ which is the weighted sum of the products of the pairs of components of a vector *Y,* with *i* and *j* being integer indices between 1 and *NxM,* and $\alpha_{ij}$ are weighting coefficients.

**23.** A method according to any one of the preceding claims for controlling a heating furnace, the energy distribution devices of which consist of burners or electric resistance heaters.

**24.** An installation equipped with energy distribution devices operating in all-or-nothing mode and by operating duration modulation, **characterized in that** it comprises a computer or a controller programmed to control the energy distribution devices according to a method according to any one of the preceding claims, with the installation being so arranged as to execute the schedule of the set of the operating sequences of the energy distribution devices, as defined in the preceding claims.

**25.** An installation according to claim 24, consisting of an industrial furnace.

FIG. 1

FIG. 16

| | | | M | | |
|---|---|---|---|---|---|
| $y_1$ | $y_2$ | $y_3$ | | | $y_M$ |
| $y_{M+1}$ | $y_{M+2}$ | $y_{M+3}$ | | | $y_{2M}$ |
| $y_{2M+1}$ | $y_{2M+2}$ | $y_{2M+3}$ | | | $y_{3M}$ |
| | | | | | |
| | | | | | |
| $y_{(N-1)M+1}$ | $y_{(N-1)M+2}$ | $y_{(N-1)M+3}$ | | | $y_{NM}$ |

2.1

FIG. 2

2.2

3.1

FIG. 3

3.2

FIG. 4

FIG. 5

FIG. 6

FIG. 7

FIG. 8

FIG. 9

FIG. 10

FIG. 11

FIG. 12

FIG. 13

FIG. 14

FIG. 15

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2853959